# EUROPÄISCHE PATENTSCHRIFT

(11) **EP 1 228 906 B1**
(45) Veröffentlichungstag und Bekanntmachung des Hinweises auf die Patenterteilung: **19.05.2004**
(21) Anmeldenummer: 02001481.7
(22) Anmeldetag: 22.01.2002
(51) Int. Cl.: B60G 21/05

(54) **Verbundlenkerachse**
Twist beam axle
Essieu à traverse déformable en torsion

(30) Priorität: 31.01.2001 DE 20101602 U
(43) Veröffentlichungstag der Anmeldung: 07.08.2002
(73) Patentinhaber: Benteler Automobiltechnik GmbH, 33104 Paderborn (DE)
(72) Erfinder: Christophliemke, Wigbert, 33758 Schloss Holte-Stukenbrock (DE); Streubel, Wolfgang, 32756 Detmold (DE)
(74) Vertreter: Ksoll, Peter, Dr.-Ing.

(56) Entgegenhaltungen:
- EP-A- 0 430 728
- EP-A- 0 681 932
- EP-A- 0 743 205
- EP-A- 0 960 753
- EP-A- 1 036 678
- DE-A- 19 910 575

## Beschreibung

Die Erfindung betrifft eine Verbundlenkerachse für Kraftfahrzeuge, welche zwei durch einen Querträger mit V- oder U-förmigem doppelwandigen Querschnitt verbundene Längslenker umfasst.

Verbundlenkerachsen kombinieren die Vorteile eines einfachen Aufbaus bei geringem Raumbedarf und guten kinematischen Eigenschaften. Der die beiden Längslenker verbindende Querträger wirkt als Torsionsstab, so dass sich bei gleichzeitigem Einfedern eine Längslenkercharakteristik und bei wechselseitigem Einfedern eine Schräglenkercharakteristik ergibt.

Es sind diverse Vorschläge bekannt, wie der Querträger einer Verbundlenkerachse ausgestaltet sein soll, um diesen auf der einen Seite biegesteif und auf der anderen Seite aber auch ausreichend torsionsweich zu gestalten. Aus der DE 44 16 725 A1 geht eine Verbundlenkerachse hervor, mit zwei radtragenden, elastisch am Aufbau angelenkten und starren Längslenkern, die über einen biegesteifen aber torsionsweichen Querträger miteinander verschweißt sind. Der Querträger besteht über die gesamte Länge aus einem Rohrprofil, das an beiden Enden einen torsionssteifen Querschnitt und im mittleren Bereich einen torsionsweichen U-, V-, L-, X- oder ähnlichen Querschnitt mit mindestens einem doppelwandigen Profilschenkel aufweist.

Im Umfang der FR 2 654 987 A1 ist eine Verbundlenkerachse bekannt, die ebenfalls einen im Querschnitt V-förmigen Querträger aufweist. Der Querträger ist über U-förmige Übergangsstücke mit dem Längslenker verschweißt.

Bei Verbundlenkerachsen bekannter Bauart werden heute in sehr vielen Anwendungsfällen Querträger aus Rohren eingesetzt, die zumindest auf dem überwiegenden Teil ihrer Länge einen V- bzw. U-förmigen doppelwandigen Querschnitt besitzen. Diese haben den Vorteil, dass kein Stabilisator notwendig ist. Außerdem kann durch die Relativlage des Profils im Verhältnis zu den Längslenkern in Abstimmung auf das Fahrgestell die jeweilige Fahreigenschaft eingestellt und damit auf den jeweiligen Kraftfahrzeugtyp abgestimmt positiv verändert werden. Gleichzeitig bringen diese Rohrausführungen gegenüber herkömmlichen Torsionsprofilen aus Flachmaterial gewichtsmäßige Vorteile mit sich.

Die bekannten Verbundlenkerachsen sind stets weitergereift und besitzen bereits ein hohes Maß an Leistungsfähigkeit bei minimiertem Gewicht. Dennoch ist man stets bemüht, die Leistungsfähigkeit weiter zu steigern und die Lebensdauer zu erhöhen, und zwar bei möglichst ökonomischer Ausgestaltung der Verbundlenkerachse.

Der Erfindung liegt daher ausgehend vom Stand der Technik die Aufgabe zugrunde, eine Verbundlenkerachse für Kraftfahrzeuge zu schaffen, mit verbesserten fahrcharakteristischen Eigenschaften bei gesteigerter Lebensdauer.

Die Lösung dieser Aufgabe besteht nach der Erfindung in einer Verbundlenkerachse nach Anspruch 1, bei der sich das Außenprofil und das Innenprofil des doppelwandigen Querträgers zumindest bereichsweise aneinander abstützen, wobei im Kontaktbereich der beiden Profile ein reibungsreduzierendes Additiv aufgebracht ist.

Die Abstützung von Außen- und Innenprofil gegeneinander verbessert das dynamische Belastungsverhalten der Verbundlenkerachse. Hierdurch können die positiven Fahreigenschaften gesteigert werden. Im Betrieb auftretende Torsions- und Biegekräfte werden von den Längslenkern in den Querträger übergeleitet, wo sie kompensiert werden. Dabei wirkt sich die Abstützung der beiden Profile gegeneinander positiv aus. Beim wechselseitigen Einfedern der Räder stellt sich eine Relativbewegung zwischen den Wänden von Außenprofilen und Innenprofilen ein. Diese Relativbewegung führt zu einer Reibung zwischen den beiden Profilen, welche im Kontaktbereich durch das aufgebrachte reibungsreduzierende Additiv reduziert ist. Damit besitzt die erfindungsgemäße Verbundlenkerachse ein besonders gutes statisches und dynamisches Lastverhalten und erreicht eine sehr hohe Lebensdauer.

Neben der reibungsreduzierenden Wirkung trägt das Additiv zu einem Korrosionsschutz bei. Das Additiv ist von einer Zusammensetzung, die eine Wirksamkeit über einen Temperaturbereich von Minus 60°C bis zu Plus 80°C gewährleistet.

Denkbar ist der Einsatz von Additiven auf keramischer Basis (Anspruch 2). Gemäß Anspruch 3 kommt ein Metalloxid-Schmiermittel als Additiv zum Einsatz. Dieses bildet nach dem Auftragen einen keramischen Schutzfilm, der eine zuverlässige Schmierung gewährleistet. Für die Praxis besonders geeignet sind temperaturbeständige Additive, wie dies Anspruch 4 vorsieht. Solche Additive weisen eine Temperaturstabilität bis über 1.000°C auf. Hierdurch ist gewährleistet, dass die Verbundlenkerachse problemlos allen Temperatureinflüssen standhalten kann, auch solchen aus Arbeitsvorgängen bei der Herstellung, wie z.B. Schweißarbeiten, Lackiervorgängen und ähnliches.

Grundsätzlich ist es denkbar, nur die Kontaktbereiche an den inneren Oberflächen des Querträgers mit dem Additiv zu beschichten. Möglich ist auch eine vollständige Beschichtung der Innenoberfläche. Vorzugsweise ist das Additiv beim Auftragen flüssig. Das Additiv wird aber schon nach kurzer Zeit pastös, so dass ein unkontrolliertes Abfließen nicht stattfindet. Hierdurch ist eine rationelle Beschichtung im üblichen Fertigungsprozess möglich. Nach dem Auftrag des Additivs wird das als Ausgangsprodukt zum Einsatz gelangende Rohr spanlos zum Querträger umgeformt. Möglich ist auch die Fertigung des Querträgers in Schalenbauweise, beispielsweise aus zwei Pressschalen, die das Außen- und Innenprofil bilden und miteinander verschweißt sind. Selbstverständlich kann auch zunächst das Profil des Querträgers fertig geformt werden. Anschließend wird das reibungsreduzierende Additiv eingebracht. Durch die flüssige Form des Additivs beim Aufbringen läuft bzw. zieht sich das Additiv infolge von Kapillarwirkung in die Zwischenräume und benetzt die Oberfläche.

Nach den Merkmalen von Anspruch 5 ist das Additiv eine Mischung, insbesondere eine emulsionsartige oder ölhaltige Mischung und enthält harte mineralische Bestandteile ― beispielsweise Keramikpigmente oder Korund, Siliciumcarbit oder Aluminiumoxid. Bevorzugt kommt eine Mischung aus Ölen oder Fetten, Keramikpigmenten, Gleitadditiven und flüchtigen Bestandteilen zur Anwendung. Die flüchtigen Bestandteile verdunsten nach dem Auftragen, so dass die anfangs fließfähige Mischung pastös wird. Die harten Bestandteile drücken sich bei äußerer Belastung in die Oberfläche der einander kontaktierenden Oberflächen des Querträgers. Sie bilden dann in diesen Bereichen unterstützt durch die Gleitadditive eine Fläche mit sehr niedrigem Reibbeiwert. Bei diesen so veränderten Flächen tritt kein Flächenfraß auf.

Die erfindungsgemäße Verbundlenkerachse kann sowohl in Stahl als auch in Leichtmetall bzw. als Leichtmetalllegierungen ausgeführt werden. Grundsätzlich trägt der V- bzw. U-förmige Querschnitt der erfindungsgemäßen Verbundlenkerachse zu einer Verbesserung der Torsionseigenschaften des Querträgers bei, und zwar bei reduziertem Gewicht. Die Fahreigenschaften, insbesondere der Sturz- und Vorspuränderung beim wechselseitigen Einfedern und/oder des Einlenkverhaltens der Verbundlenkerachse bei Kurvenfahrten werden verbessert. Zweckmäßigerweise besteht der Querträger aus einem Rohrprofil, das an beiden Enden einen torsionssteifen Querschnitt und im mittleren Bereich einen torsionsweichen U- oder V-förmigen doppelwandigen Querschnitt aufweist. Die Übergänge vom torsionssteifen zum torsionsweichen Querschnitt sind fließend gestaltet. Durch diese Ausformung des Querträgers werden die Kräfte in diesem besser verteilt. Die auftretenden Biege- und Torsionskräfte werden gut von den Längslenkern aufgenommen.

Die Erfindung ist nachfolgend anhand von in den Zeichnungen dargestellten Ausführungsbeispielen näher beschrieben. Es zeigen:
- Figur 1: eine perspektische Ansicht einer Verbundlenkerachse;
- Figur 2: einen vertikalen Querschnitt durch den Querträger;
- Figur 3: ebenfalls in perspektivischer Darstellung den Anbindungsbereich eines Querträgers einer Verbundlenkerachse für Kraftfahrzeuge an einen Längslenker;
- Figur 4: einen Vertikalschnitt durch die Darstellung der Figur 2 entlang der Linie IV-IV und

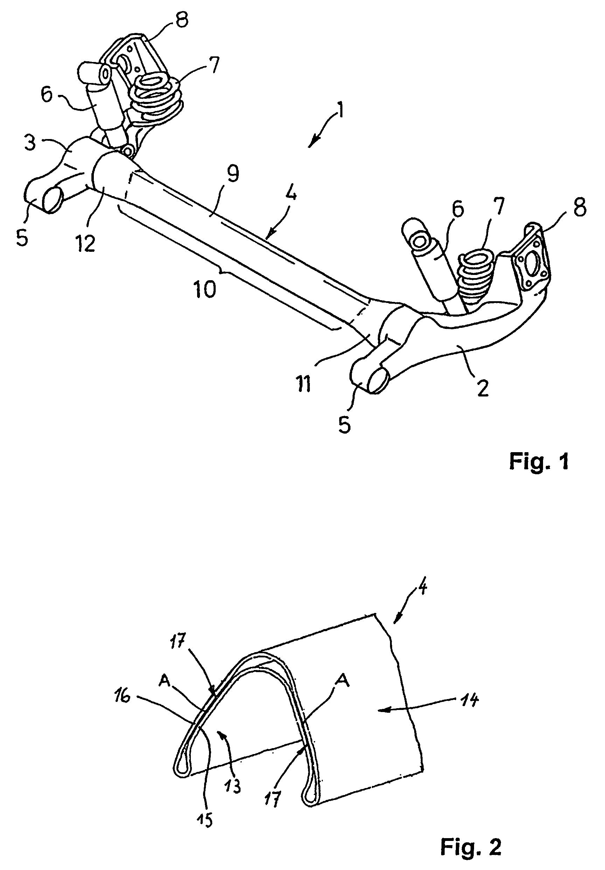

Die in Figur 1 dargestellte Verbundlenkerachse 1 umfasst im wesentlichen zwei radführende Längslenker 2, 3 und einen die beiden Längslenker 2, 3 verbindenden Querträger 4. Die Längslenker 2, 3 sind als Rohrbauteile ausgeführt. An ihrem vorderen Ende ist je ein Lagerauge 5 vorgesehen zur elastischen Anlenkung an den hier nicht dargestellten Fahrzeugaufbau. Zwischen den Längslenkern 2, 3 und dem Fahrzeugaufbau sind ferner Stoßdämpfer 6 und Federn 7 angeordnet. Am rückwärtigen Ende der Längslenker 2, 3 sind Aufnahmen 8 zur Verbindung mit jeweils einem Radträger zur Lagerung eines Rads vorgesehen.

Der Querträger 4 besteht aus einem Rohrprofil 9, dessen mittlerer Bereich 10 (Torsionsbereich) einen torsionsweichen Querschnitt und dessen beide Enden 11, 12 einen torsionssteifen Querschnitt aufweisen. Die Übergangsbereiche vom torsionssteifen zum torsionsweichen Querschnitt sind fließend gestaltet.

Insbesondere anhand der Figur 2 erkennt man, dass der Querträger im mittleren Bereich 10, also auf dem überwiegenden Teil seiner Länge, einen V- oder U-förmigen doppelwandigen Querschnitt besitzt mit einem Innenprofil 13 und einem Außenprofil 14, die einander entlang ihrer Schenkel 15, 16 bereichsweise kontaktieren und sich so gegeneinander abstützen. Wenigstens im Kontaktbereich 17 zwischen dem Außenprofil 14 und dem Innenprofil 13 ist ein reibungsreduzierendes Additiv A aufgebracht. Als Additiv A kommt bevorzugt eine Mischung aus Mineralölen, Syntheseölen, Keramikpigmenten, Benzinen und Gleitadditiven zum Einsatz.

Das Additiv A ist beim Herstellungsvorgang des Querträgers 4 in flüssiger Form in das Rohrprofil 9 eingebracht worden. Anschließend wird das Rohrprofil 9 spanlos zum Querträger 4 umgeformt und erkält den V- bzw. U-förmigen Querschnitt. Beim Aufbringen ist das Additiv A flüssig. Hierdurch wird die innere Oberfläche des Rohrprofils 9 optimal benetzt. Nach kurzer Zeit ändert das Additiv A seine Konsistenz und wird pastös. Hierdurch wird ein Abfließen bei der Weiterverarbeitung vermieden.

Das Additiv A enthält harte Bestandteile, die sich bei Belastung der Verbundlenkerachse 1 im Kontaktbereich 17 in die Oberfläche des Querträgers 4 eindrücken und hier eine Fläche mit niedrigem Reibbeiwert erzeugen.

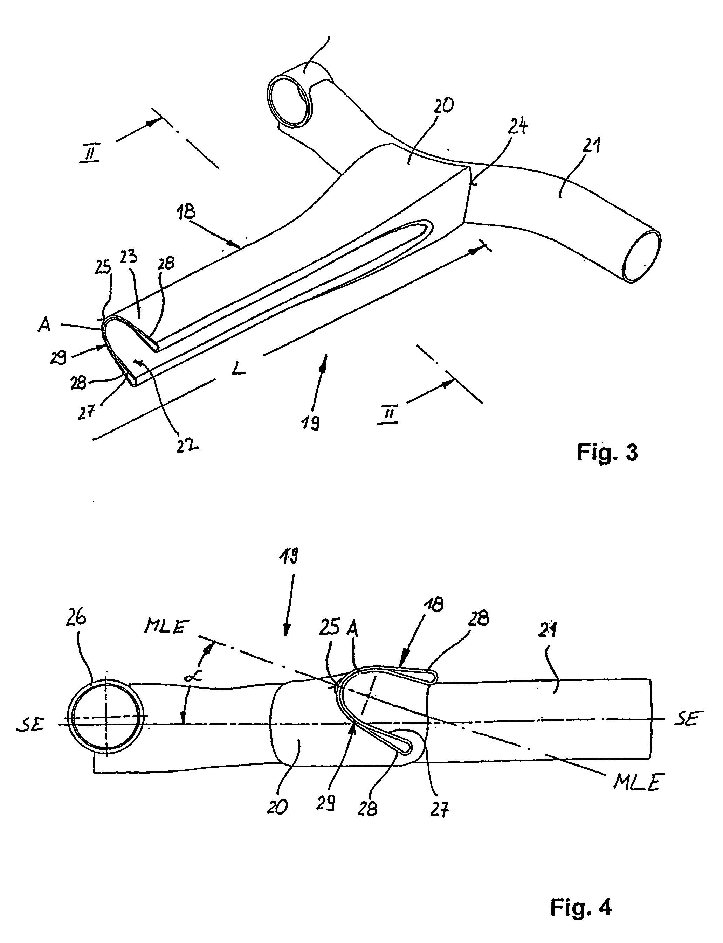

Die Figuren 3 und 4 zeigen den Querträger 18 einer weiteren Ausführungsform einer Verbundlenkerachse19. Der bezüglich seiner nicht näher bezeichneten vertikalen Mittelquerebene symmetrisch ausgebildete Querträger 18 ist mit den Enden 20 an aus Rohren gebildeten Längslenkern 21 geschweißt.

Der Querträger 18 weist auf dem überwiegenden Teil seiner Länge L einen V-förmigen doppelwandigen Querschnitt auf mit einem Innenprofil 22 und einem Außenprofil 23. Der Querträger 18 ist durch spanlose Umformung eines im Querschnitt runden Rohrs gebildet. An den Enden 20 ist der Querträger 18 spanlos kastenartig umgeformt. Die Stirnseiten 24 der kastenartigen Enden 20 sind über umlaufende Schweißnähte mit den Längslenkern 21 verbunden. Die Enden 20 sind im Querschnitt vergrößert ausgeformt, wobei sie sich über den Scheitel 25 des Querträgers 18 in Richtung zu endseitig der Längslenker 21 vorgesehenen Aufnahmen 26 für Gummilager erstrecken.

Insbesondere anhand der Figur 4 ist zu erkennen, dass die durch den Scheitel 25 und mittig zwischen den Schenkeln 27, 28 von Außenprofil 23 und Innenprofil 22 verlaufenden Mittellängsebene MLE in Bezug auf die sich durch die Längsachsen der Längslenker 21 erstreckende Symmetrieebene SE unter einem Winkel α angeordnet ist. Dieser Winkel α kann je nach den gewünschten Fahreigenschaften eines Kraftfahrzeugs in Bezug auf dessen Rollsteifigkeit sowie der Verstellung von Spur und Sturz am Radflansch zwischen 20° und 60°, vorzugsweise 30° bis 50°, liegen.

Das Innenprofil 22 und das Außenprofil 23 stützen sich im Bereich des Scheitels 25 und der sich anschließenden Schenkel 27, 28 gegeneinander ab. Mindestens in dem Kontaktbereich 29 ist ein reibungsreduzierendes Additiv A aufgebracht. Das Additiv A bewirkt eine Reibminderung im Kontaktbereich. An den so veränderten Flächen tritt kein Flächenfraß auf.

### Bezugszeichenaufstellung:

- 1 -: Verbundlenkerachse
- 2 -: Längslenker
- 3 -: Längslenker
- 4 -: Querträger
- 5 -: Lagerauge
- 6 -: Stoßdämpfer
- 7 -: Feder
- 8 -: Aufnahme
- 9 -: Rohrprofil
- 10 -: mittlerer Bereich von 4
- 11 -: Ende von 4
- 12 -: Ende von 4
- 13 -: Innenprofil
- 14 -: Außenprofil
- 15 -: Schenkel
- 16 -: Schenkel
- 17 -: Kontaktbereich
- 18 -: Querträger
- 19 -: Verbundlenkerachse
- 20 -: Ende von 18
- 21 -: Längslenker
- 22 -: Innenprofil
- 23 -: Außenprofil
- 24 -: Stirnseite v. 20
- 25 -: Scheitel von 18
- 26 -: Aufnahme
- 27 -: Schenkel
- 28 -: Schenkel
- 29 -: Kontaktbereich

- A -: Additiv
- L -: Länge von 18
- MLE -: Mittellängsebene
- SE -: Symmetrieebene
- α -: Winkel zwischen MLE u. SE

## Patentansprüche

1. Verbundlenkerachse für Kraftfahrzeuge, welche zwei durch einen Querträger (4; 18) verbundene Längslenker (2, 3; 21) aufweist, wobei der Querträger (4; 18) auf dem überwiegenden Teil seiner Länge einen V-oder U-förmigen doppelwandigen Querschnitt mit einem Innenprofil (13; 22) und einem Außenprofil (14; 23) besitzt, **dadurch gekennzeichnet, dass** sich das Außenprofil (14; 23) und das Innenprofil (13; 22) zumindest bereichsweise aneinander abstützen, wobei im Kontaktbereich (15; 29) zwischen Außenprofil (14; 23) und Innenprofil (13; 22) ein reibungsreduzierendes Additiv (A) aufgebracht ist.

2. Verbundlenkerachse nach Anspruch 1, **dadurch gekennzeichnet, dass** das Additiv (A) keramischer Basis ist.

3. Verbundlenkerachse nach Anspruch 1, **dadurch gekennzeichnet, dass** das Additiv (A) ein Metalloxid-Schmiermittel ist.

4. Verbundlenkerachse nach einem der Ansprüche 1 bis 3, **dadurch gekennzeichnet, dass** das Additiv (A) temperaturbeständig ist.

5. Verbundlenkerachse nach einem der Ansprüche 1 bis 4, **dadurch gekennzeichnet, dass** das Additiv (A) harte Bestandteile enthält, die sich unter Druck in die einander kontaktierenden Oberflächen des Kontaktbereichs eindrücken.

## Claims

1. A dead beam axle for motor vehicles, comprising two trailing arms (2, 3; 21) connected by a cross-member (4; 18), the cross-member (4; 18) having, over the major part of its length, a V or U shaped double-walled cross-section with an inner profile (13; 22) and an outer profile (14; 23), **characterised in that** the outer profile (14; 23) and the inner profile (13; 22) bear on one another at least in certain zones, a friction-reducing additive (A) being applied in the contact zone (15; 29) between the outer profile (14; 23) and the inner profile (13; 22).

2. A dead beam axle according to claim 1, **characterised in that** the additive (A) is ceramic based.

3. A dead beam axle according to claim 1, **characterised in that** the additive (A) is a metal oxide lubricant.

4. A dead beam axle according to any one of claims 1 to 3, **characterised in that** the additive (A) is temperature-resistant.

5. A dead beam axle according to any one of claims 1 to 4, **characterised in that** the additive (A) contains hard constituents which under pressure press into the contacting surfaces of the contact zone.

## Revendications

1. Essieu à traverse déformable en torsion pour véhicules automobiles, qui comporte deux bras oscillants longitudinaux (2,3;21) raccordés par une traverse (4;18), dans lequel la traverse (4;18) présente sur la plus grande partie de sa longueur une section transversale à double paroi en forme de V ou en forme de U avec un profil interne (13;22) et un profil externe (14;23),
**caractérisé en ce que**
le profil externe (14;23) et le profil interne (13;22) s'appuient au moins par endroits l'un sur l'autre, un additif réducteur de friction (A) étant appliqué dans la zone de contact (15;29) entre le profil externe (14;23) et le profil interne (13;22).

2. Essieu à traverse déformable en torsion,
**caractérisé en ce que**
l'additif (A) est une base céramique.

3. Essieu à traverse déformable en torsion,
**caractérisé en ce que**
l'additif (A) est un lubrifiant à base d'oxyde métallique.

4. Essieu à traverse déformable en torsion selon l'une des revendications 1 à 3,
**caractérisé en ce que**
l'additif (A) est résistant en température.

5. Essieu à traverse déformable en torsion selon l'une des revendications 1 à 4,
**caractérisé en ce que**
l'additif (A) contient des composants durs qui s'impriment sous l'effet de la compression dans les surfaces de la zone de contact entrant en contact l'une avec l'autre.
